Europäisches Patentamt

European Patent Office

Office européen des brevets

(11) Veröffentlichungsnummer: **0 416 147 B1**

# EUROPÄISCHE PATENTSCHRIFT

(45) Veröffentlichungstag der Patentschrift: **23.12.92**

(51) Int. Cl.⁵: **G01T 1/00**

(21) Anmeldenummer: **89116452.7**

(22) Anmeldetag: **06.09.89**

(54) **Röntgendetektor.**

(43) Veröffentlichungstag der Anmeldung:
**13.03.91 Patentblatt 91/11**

(45) Bekanntmachung des Hinweises auf die
Patenterteilung:
**23.12.92 Patentblatt 92/52**

(84) Benannte Vertragsstaaten:
**DE FR GB**

(56) Entgegenhaltungen:
**EP-A- 0 275 446**
**EP-A- 0 316 222**
**US-A- 4 845 363**

(73) Patentinhaber: **SIEMENS AKTIENGESELL-
SCHAFT
Wittelsbacherplatz 2
W-8000 München 2(DE)**

(72) Erfinder: **Schulz, Reiner, Dipl.-Phys.
Egerstrasse 30
W-8520 Erlangen(DE)**

Rank Xerox (UK) Business Services

**Beschreibung**

Die Erfindung betrifft einen Röntgendetektor gemäß dem ersten Teil des Patentanspruches 1.

In Röntgencomputertomographen oder in Gepäckprüfanlagen werden Röntgendetektoren verwendet, die aus einem Szintillationskristall und einem Fotosensor aufgebaut sind, welcher das vom Szintillationskristall ausgesandte Licht in elektrische Signale umwandelt. Bei Computertomographen können mehrere Röntgendetektoren dieser Art in einer Detektorreihe, einem sogenannten Detektorarray, angeordnet sein, das von einem fächerförmigen Röntgenstrahlenbündel getroffen wird, welches das Untersuchungsobjekt durchsetzt hat. Zur Anfertigung von Computertomogrammen mehrerer aufeinanderfolgender paralleler Schichten können diese Röntgendetektoren im Detektorarray senkrecht zur Fächerebene in Einzeldetektoren unterteilt sein. Auf diese Weise ist ohne Bewegung des Strahlenempfängers die Anfertigung von Computertomogrammen aufeinanderfolgender paralleler Schichten möglich.

Durch die US-A-4 845 363 ist ein Röntgendetektor gemäß dem ersten Teil des Patentanspruches 1 bekannt, bei dem zur Kontaktierung der Fotosensoren elektrische Leiter vorgeschlagen sind. Dies bedeutet jedoch einen erheblichen fertigungstechnischen Aufwand. Ferner ist durch die EP-A-0 275 446 ein Röntgendetektor mit mehreren Szintillationskristallen und dahinterliegenden Fotodioden bekannt. Hinsichtlich der Kontaktierung der Fotodioden sind dieser Schrift keine Einzelheiten entnehmbar. Schließlich ist durch die EP-A-0 316 222 ein radiologischer Bilddetektor bekannt, bei dem Fotodioden matrixartig angeordnet sind, deren Signale mit Hilfe sich kreuzender Elektroden kapazitiv abgenommen werden.

Der Erfindung liegt die Aufgabe zugrunde, einen Röntgendetektor gemäß dem ersten Teil des Patentanspruches 1 so auszubilden, daß er gut handhabbar, gut positionierbar und leicht zu kontaktieren ist. Ferner soll eine Unterteilung des Röntgendetektors in mehrere Einzeldetektoren leicht möglich sein.

Diese Aufgabe ist erfindungsgemäß gelöst durch den Röntgendetektor gemäß Patentanspruch 1.

Der erfindungsgemäße Röntgendetektor weist einen Szintillationskristall, ggf. in einer Aussparung eines Szintillatorträgers, auf, an dem der Fotosensor, gegebenenfalls ein den Fotosensor tragendes Blättchen, anliegt. Es verbindet dabei den Fotosensor elektrisch mit den Kontaktflächen auf dem Szintillationskristall oder dem Szintillatorträger. Der äußere elektrische Anschluß erfolgt also am Szintillatorträger oder am Szintillationskristall.

Gemäß einer Weiterbildung der Erfindung können auch mehrere Seiten des Szintillationskristalles oder des Szintillatorträgers von Fotosensoren überdeckt sein.

Die Erfindung ist nachfolgend anhand der Zeichnung näher erläutert. Es zeigen:

Fig. 1a, 1b        die Einzelteile eines Röntgendetektors nach der Erfindung,

Fig. 2, 3          zwei Varianten des Röntgendetektors gemäß den Fig. 1a, 1b,

Fig. 4a, 4b        einen in Einzeldetektoren unterteilten Röntgendetektor nach der Erfindung, und

Fig. 5 bis 7       drei weitere Varianten eines Röntgendetektors nach der Erfindung.

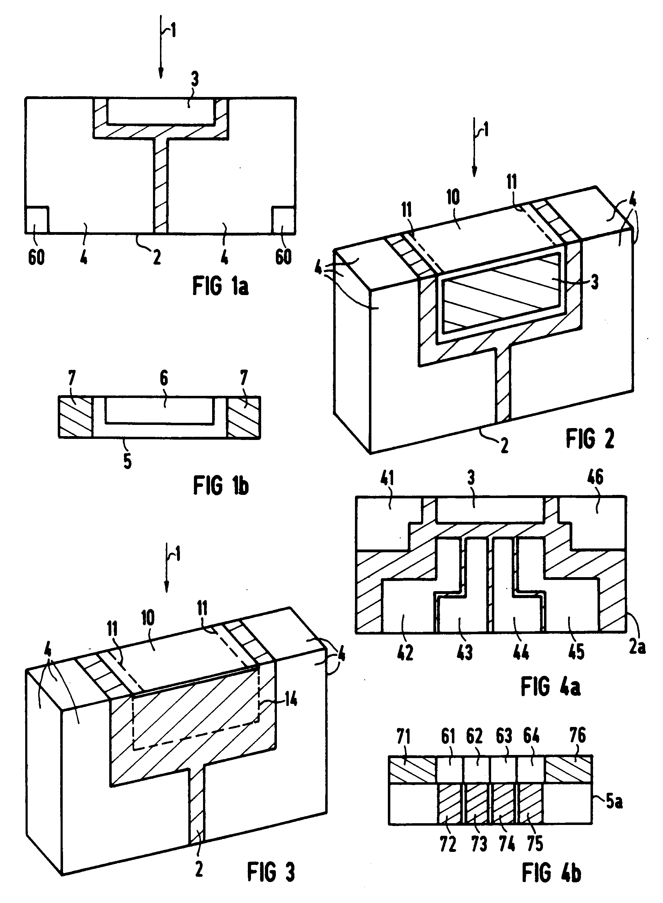

Der Röntgendetektor nach den Fig. 1a, 1b besteht aus einem im wesentlichen quaderförmigen Szintillatorträger 2 (Fig. 1a), an den ein- oder beidseitig ein dünnes Blättchen 5 mit einem Fotosensor 6 (Fig. 1b) geklebt wird. Der Röntgendetektor weist die Röntgenstrahlung 1 nach. Die in der Zeichenebene liegende Fläche des Blättchens 5 wird dabei auf eine in der Zeichenebene liegende oder dazu parallele Fläche des Szintillatorträgers 2 geklebt.

In einer Aussparung des Szintillatorträgers 2 ist ein Szintillationskristall 3 angeordnet. Teile des Szintillatorträgers 2 sind zur Kontaktierung elektrisch leitend ausgeführt (Kontaktflächen 4), z.B. oberflächlich metallisiert. Insgesamt ist der Szintillatorträger 2 so groß ausgeführt, daß eine gute Handhabung und Positionierung möglich sind. Die Kontaktflächen sind durch die schraffierten Bereiche voneinander isoliert.

Der Fotosensor 6 kann z.B. aus amorphem Silizium hergestellt und auf dem dünnen Blättchen 5, z.B. einer Kunststoff-Folie, aufgebracht sein. Der Fotosensor 6 ist so ausgebildet, daß seine lichtempfindliche Fläche beim Aufkleben auf den Szintillatorträger 2 die Seitenflächen des Szintillationskristalles 3 abdeckt. Die Kontaktflächen 7 auf dem Blättchen 5 sind so angeordnet, daß sie beim Aufkleben über den entsprechenden Kontaktflächen 4 des Szintillationsträgers 2 liegen. Als Kleber wird an der lichtempfindlichen Sensorfläche ein geeignetes optisch transparentes und an den Kontaktflächen 4, 7 ein geeignetes elektrisch leitendes Material verwendet.

Die Fig. 2 zeigt eine spezielle Realisierungsmöglichkeit für den Szintillatorträger 2. Die Basis bildet ein Grundkörper, in den der Szintillationskristall 3 eingefügt wurde. Der Szintillationskristall 3 kann von einer reflektierenden Schicht 10 umgeben sein. An der Seitenfläche des Szintillationskristalles 3 befindet sich keine reflektierende Schicht, wenn dort ein Fotosensor angebracht werden soll. Die reflektierende Schicht 10 kann als Kleber ausgeführt sein, welcher mit reflektierendem Material gefüllt ist, z.B. $TiO_2$. Die Linien 11 stellen die Grenzen des bestrahlten Bereiches dar.

Eine weitere Realisierungsmöglichkeit für den Szintillatorträger 2 ist in Fig. 3 skizziert. Der Grundkörper besteht ganz aus Szintillatormaterial. Die Linien 11 begrenzen den bestrahlten Bereich. Linie 14 begrenzt den Bereich, aus dem Licht austritt. Zur Erhöhung der Lichtausbeute kann die Röntgeneintrittsfläche mit einer lichtreflektierenden Schicht 10 versehen sein. Zur Kontaktierung sind die elektrisch leitenden Flächen 4 angebracht.

Der dünne Fotosensor 6 kann so strukturiert sein, daß er aus mehreren einzelnen, z .B. vier Sensorelementen 61, 62, 63, 64 besteht (Fig. 4b). Die elektrisch leitenden Kontaktflächen 41 bis 46 des dazugehörigen Szintillatorträgers 2a sind so angeordnet, daß sie beim Aufkleben gegenüber den entsprechenden Kontaktflächen 71 bis 76 des Blättchens 5a liegen (Fig. 4a). Dadurch erhält man mehrere Einzeldetektoren in Längsrichtung. Bei der Verwendung eines solchen Röntgendetektors in der Röntgencomputertomographiekönnen während einer Aufnahme alle Daten erfaßt werden, die nötig sind, um mehrere verschiedene Schnittbilder zu errechnen. Die Kontaktflächen 72 bis 75 sind den Sensorelementen 61 bis 64 individuell zugeordnet, während die Kontaktflächen 71, 76 gemeinsam sind.

Auf dem Szintillatorträger können sich neben den Kontakt- und Leitungsbereichen auch Elemente zur Signalaufbereitung (z.B. Strom-Spannungswandler, Verstärker ... ) oder Schaltelemente befinden. Diese Elemente können z.B. in Dünnfilmtechnik aus amorphem Silizium hergestellt sein (z.B. 60 in Fig. 1).

Die so ausgebauten Röntgendetektoren können gut positionierbar zu einem Detektorarray zusammengefügt werden. Über die Kontaktflächen 4, 41 bis 45 können die Komponenten leicht kontaktiert werden, z.B. direkt mit einer Leiterplatte mittels Leitkleber oder Lot, oder indirekt durch Kleben oder Löten von elektrischen Verbindungen (z.B. Lötstiften) verbunden werden.

**Patentansprüche**

1. Röntgendetektor mit einem Szintillationskristall (2, 3) und mindestens einem Fotosensor (6, 61 bis 64, 15, 17) zur Umwandlung des Lichtes des Szintillationskristalles (2, 3) in elektrische Signale, wobei

 - der Fotosensor (6, 61 bis 64, 15, 17) flach ausgebildet ist und mindestens eine elektrische Kontaktfläche (7, 71 bis 76, 16) trägt und
 - am Szintillationskristall (2, 3) derart anliegt, daß der Fotosensor (6, 61 bis 64, 15, 17) das Licht des Szintillationskristall (2, 3) erfaßt,

**dadurch gekennzeichnet,** daß der Fotosensor (6, 61 bis 64, 15, 17) mehrere Kontaktflächen (7, 71 bis 76, 16) trägt, die an entsprechenden Kontaktflächen (4, 41 bis 50) auf dem Szintillationskristall (2, 3) oder einem Szintillatorträger (2, 2a, 2b) anliegen, wodurch der Fotosensor (6, 61 bis 64, 15, 17) elektrisch mit den Kontaktflächen (4, 41 bis 50) auf dem Szintillationskristall (2, 3) oder dem Szintillatorträger (2, 2a, 2b) verbunden wird, und daß der Fotosensor (6, 61 bis 64, 15, 17) auf einem Blättchen (5) angeordnet ist, das am Szintillationskristall (2, 3) seitlich aufgeklebt ist.

2. Röntgendetektor nach Anspruch 2, **dadurch gekennzeichnet,** daß das Blättchen (5) mit einem optisch transparenten Kleber an der lichtempfindlichen Sensorfläche und einem elektrisch leitfähigen Kleber an den Kontaktflächen (7, 71 bis 76, 16) am Szintillationskristall (2, 3) und/oder am Szintillatorträger (2, 2a, 2b) angeklebt ist.

3. Röntgendetektor nach einem der Ansprüche 1 bis 3, **dadurch gekennzeichnet,** daß der Szintillationskristall (3) in einer Aussparung des Szintillatorträgers (2, 2a, 2b) liegt und mit Ausnahme der dem Fotosensor (6, 61 bis 64, 15, 17) zugeordneten Seite mit einer reflektierenden Schicht (10) überdeckt ist.

4. Röntgendetektor nach einem der Ansprüche 1 bis 3, **dadurch gekennzeichnet,** daß der Szintillationskristall (2) größer als der Fotosensor (6) ist, nur in dem vom Fotosensor (6) überdeckten Bereich Licht aussendet und in seinem darüber hinausragenden Bereich mit den Kontaktflächen (4) für die Kontaktflächen (7) des Fotosensors (6) versehen ist.

5. Röntgendetektor nach einem der Ansprüche 1 bis 5, **dadurch gekennzeichnet,** daß der Fotosensor in eine Anzahl von Einzelsensoren (61 bis 64) unterteilt ist und jedem Einzelsensor (61 bis 64) eine individuelle Kontaktfläche (72 bis 75) zugeordnet ist, die mit einer entsprechenden Kontaktfläche (42 bis 45) auf dem Szintillationskristall (3) oder dem Szintillatorträger (2a) verbunden ist.

6. Röntgendetektor nach einem der Ansprüche 1 bis 7, **dadurch gekennzeichnet,** daß auf dem Szintillatorträger (2) Elemente (60) zur Signalaufbereitung aufgebracht sind.

7. Röntgendetektor nach einem der Ansprüche 1 bis 8, **dadurch gekennzeichnet,** daß mehrere Seiten des Szintillationskristalles (3) oder des Szintillatorträgers (2) von Fotosensoren (6, 61 bis 64, 15, 17) überdeckt sind.

## Claims

1. An x-ray detector with a scintillation crystal (2,3) and at least one photo sensor (6,61 to 64, 15, 17) for converting the light of the scintillation crystal (2,3) into electric signals wherein
   - the photo sensor (6,61 to 64, 15, 17) is formed to be flat and supports at least one electric contact face (7,17 to 76, 16) and
   - rests on the scintillation crystal (2,3) such that the photo sensor (6,61 to 64, 15, 17) detects the light of the scintillation crystal (2,3),

   characterised in that the photo sensor (6,61 to 64, 15, 17) supports several contact faces (7,71 to 76, 16) which rest on corresponding contact faces (4, 41 to 50) on the scintillation crystal (2,3) or a scintillator carrier (2,2a, 2b), whereby the photo sensor (6,61 to 64, 15, 17) is connected electrically to the contact faces (4, 41 to 50) on the scintillation crystal (2,3) or the scintillator carrier (2, 2a, 2b) and in that the photo sensor (6, 61 to 64, 15, 17) is arranged on a lamina (5), which is adhered on the side to the scintillation crystal (2,3).

2. An x-ray detector according to claim 2, characterised in that the lamina (5) is adhered to the scintillation crystal (2,3) and/or to the scintillator carrier (2, 2a, 2b) with an optically transparent adhesive on the light-sensitive sensor face and an electrically conductive adhesive on the contact faces (7, 71 to 76, 16).

3. An x-ray detector according to one of claims 1 to 3, characterised in that the scintillation crystal (3) lies in a recess of the scintillator carrier (2,2a, 2b) and with the exception of the side associated with the photo sensor (6, 61 to 64, 15, 17) is covered with a reflecting layer (10).

4. An x-ray detector according to one of claims 1 to 3, characterised in that the scintillation crystal (2) is larger than the photo sensor (6), only emits light in the region covered by the photo sensor (6) and in its region projecting therebeyond is provided with the contact faces (4) for the contact faces (7) of the photo sensor (6).

5. An x-ray detector according to one of claims 1 to 5, characterised in that the photo sensor is divided into a number of individual sensors (61 to 64) and each individual sensor (61 to 64) is allocated an individual contact face (72 to 75), which is connected to a corresponding contact face (42 to 45) on the scintillation crystal (3) or the scintillator carrier (2a).

6. An x-ray detector according to one of claims 1 to 7, characterised in that elements (60) for signal conditioning are attached to the scintillator carrier (2).

7. An x-ray detector according to one of claims 1 to 8, characterised in that several sides of the scintillation crystal (3) or the scintillator carrier (2) are covered by photo sensors (6, 61 to 64, 15, 17).

## Revendications

1. Détecteur de rayons X comportant un cristal à syntillation (2;3) et à au moins un photodétecteur (6,61 à 64, 15, 17) pour convertir la lumière du cristal à scintillation (2,3) en des signaux électriques, et dans lequel
   - le photodétecteur (6,61 à 64,15,17) possède une forme plate et porte au moins une surface électrique de contact (7,71 à 76,16) et
   - s'applique contre le cristal à scintillation (2,3) de telle sorte que le photodétecteur (6, 61 à 64, 15,17) détecte la lumière du cristal à scintillation (2,3),

   caractérisé par le fait que le photodétecteur (6,61 à 64,15,17) porte plusieurs surfaces de contact (7,71 à 76,16), qui s'appliquent sur des surfaces de contact correspondantes (4,41 à 50) situées sur le cristal à scintillation (2,3) ou sur un support de scintillateur (2,2a,2b), ce qui a pour effet que le photodétecteur (6,61 à 64,15,17) est raccordé électriquement aux surfaces de contact (4,41 à 50) situées sur le cristal à scintillation (2,3) ou sur le support de scintillateur (2,2a,2b) et que le photodétecteur (6,61 à 64,15,17) est disposé sur une petite plaquette (5) qui est collée latéralement sur le cristal à scintillation (2,3).

2. Détecteur de rayons X suivant la revendication 1, caractérisé par le fait que la plaquette (5) est collée par une colle transparente du point de vue optique, sur la surface photosensible du détecteur et avec une colle électriquement conductrice aux surfaces de contact (7,71 à 76,7) situées sur le cristal à scintillation (2,3) et/ou sur le support de scintillateur (2,2a,2b).

3. Détecteur de rayons X suivant l'une des revendications 1 et 2, caractérisé par le fait que le cristal à scintillation (3) est situé dans un évidement du support de scintillateur (2,2a,2b) et est recouvert, hormis sa face tournée vers le photodétecteur (6,61 à 64,15,17), par une couche réfléchissante (10).

4. Détecteur de rayons X suivant l'une des revendications 1 à 3, caractérisé par le fait que le cristal à scintillation (2) est plus étendu que le photodétecteur (6), émet une lumière uniquement dans la zone recouverte par le photodétecteur (6) et est pourvu, dans sa partie qui fait saillie au-delà du photodétecteur, des surfaces de contact (4) pour les surfaces de contact (7) du photodétecteur (6).

5. Détecteur de rayons X suivant l'une des revendications 1 à 4, caractérisé par le fait que le photodétecteur est subdivisé en un nombre de détecteurs individuels (61 à 64) et qu'à chaque détecteur individuel (61 à 64) est associée une surface individuelle de contact (72 à 75), qui est raccordée à une surface de contact correspondante (42 à 45) située sur le cristal à scintillation (3) ou sur le support de scintillateur (2a).

6. Détecteur de rayons X suivant l'une des revendications 1 à 5, caractérisé par le fait que des éléments (60) utilisés pour la préparation des signaux sont disposés sur le support de scintillateur (2).

7. Détecteur de rayons X suivant l'une des revendications 1 à 6, caractérisé par le fait que plusieurs faces du cristal à scintillation (3) ou du support de scintillateur (2) sont recouvertes par des photodétecteurs (6,61 à 64,15,17).

FIG 1a

FIG 1b

FIG 2

FIG 3

FIG 4a

FIG 4b